# EUROPEAN PATENT APPLICATION

(11) **EP 4 518 018 A1**
(43) Date of publication of application: **05.03.2025**
(21) Application number: 23840029.5
(22) Date of filing: 17.07.2023
(51) Int. Cl.: H01M 50/609, H01M 50/627, H01M 50/107, H01M 50/167

(54) **PELLETS FOR ELECTROLYTE INJECTION AND ELECTROLYTE INJECTION METHOD**

(30) Priority: 15.07.2022 KR 20220087614
(71) Applicant: LG Energy Solution, Ltd., Seoul 07335 (KR)
(72) Inventor: SIM, Hyung-Sub, Daejeon 34122 (KR); SHIM, Kyu-Hun, Daejeon 34122 (KR); LEE, Jun-Oh, Daejeon 34122 (KR); LEE, Gil-Young, Daejeon 34122 (KR); HAN, Myoung-Dae, Daejeon 34122 (KR)
(74) Representative: Goddar, Heinz J.
(86) International application number: PCT/KR2023/010219
(87) International publication number: WO 2024/014938

(57) **Abstract**

A pallet according to an embodiment of the present disclosure is a pallet for electrolyte injection configured to connect an electrolyte feeder for feeding an electrolyte to an open portion on a side of a housing of a battery, and includes a hopper having a hollow structure; and a sealing member including a hopper coupling portion coupled to the hopper and a battery sealing portion configured to seal the open portion, wherein the battery sealing portion comes into close contact with an inner surface of the housing of the battery.

## Description

### TECHNICAL FIELD

The present disclosure relates to a pallet for electrolyte injection and an electrolyte injection method.

The present application claims priority to Korean Patent Application No. 10-2022-0087614 filed on July 15, 2022 in the Republic of Korea, the disclosures of which are incorporated herein by reference.

### BACKGROUND ART

A secondary battery may include an electrode assembly and an electrolyte. In the fabrication of the secondary battery, after a housing of the secondary battery is sealed, a hole for electrolyte injection may be formed, or electrolyte injection may be followed by housing sealing.

In any case, it is necessary to prevent electrolyte leakage in the secondary battery during electrolyte injection. To prevent electrolyte leakage, a tight seal on a connected part between an injector and the secondary battery is required.

For example, in the case of a cylindrical secondary battery, after inserting an electrode assembly through an open portion on a side of the housing, electrolyte injection may be performed. The electrolyte injection may be performed by feeding the electrolyte using an electrolyte feeder connected to a side of a pallet configured to connect the electrolyte feeder to the secondary battery while an opposite side of the pallet is inserted into the open portion of the housing of the secondary battery.

In this case, the end of the pallet inserted into the open portion of the housing may come into close contact with a beading portion of the housing. The inner surface of the beading portion extending inward around the housing may not be perfectly flat, and other component may be disposed on the beading portion. Accordingly, though the end of the pallet is in close contact with the beading portion, a seal on the connected part of the pallet and the secondary battery may be incomplete.

To form a tight seal on the connected part, the pallet may have an outer diameter or width of the end that is substantially equal to an inner diameter or width of the housing to bring it into close contact with the inner surface of the sidewall of the housing. However, for reinforced sealing, when the size of the end of the pallet increases, the process of inserting the pallet into the secondary battery may not be easy, and to make it easy to insert the pallet, when the size of the end of the pallet decreases, the seal may be poor or incomplete.

Accordingly, there is a need for the development of pallets for electrolyte injection having a structure for solving the above-described problem.

### SUMMARY

### Technical Problem

The present disclosure is designed to solve the above-described problem, and therefore the present disclosure is directed to providing a pallet for electrolyte injection that is easy to perform a process of inserting the pallet into a battery and ensures enhanced sealability on a connected part between the pallet and the battery.

The problem to be solved by the present disclosure is not limited to the above-described problems, and these and other problems will be clearly understood by those skilled in the art from the following description.

### Technical Solution

To solve the above-described problem, a pallet according to an embodiment of the present disclosure is a pallet for electrolyte injection configured to connect an electrolyte feeder for feeding an electrolyte to an open portion on a side of a housing of a battery, and includes a hopper having a hollow structure; and a sealing member including a hopper coupling portion coupled to the hopper and a battery sealing portion configured to seal the open portion, wherein the battery sealing portion is configured to come into close contact with an inner surface of the housing of the battery.

The sealing member may have a hollow structure having an internal space in communication with an internal space of the hopper.

The battery sealing portion may be configured to come into close contact with the inner surface of the battery housing as an end of the battery sealing portion deforms outwards when pressed towards the battery.

The battery sealing portion may be configured to increase in inner diameter or an inner width in a direction facing away from the hopper.

The battery sealing portion may be configured to decrease in thickness in a direction facing away from the hopper.

The battery sealing portion may be configured such that when pressed towards the battery, an end of the battery sealing portion slides in an outward direction of the battery on a beading portion of the housing of the battery and comes into close contact with the inner surface of the housing above the beading portion.

The sealing member may include a core protection portion configured to reduce a cross-sectional area of an internal space of the sealing member through which the electrolyte passes.

The core protection portion may be configured to go across the internal space of the sealing member.

The core protection portion may be configured to pass through a central area of the internal space of the sealing member.

The core protection portion may be located such that the core protection portion overlaps a winding center hole of an electrode assembly accommodated in the battery at least in part.

To solve the above-described problem, an electrolyte injection method according to an embodiment of the present disclosure is an electrolyte injection method for injecting an electrolyte into a battery through an open portion on a side of a housing of a battery, and includes an insertion step of inserting a pallet for electrolyte injection into the open portion; a seating step of seating a sealing member of the pallet on a beading portion of the housing; a close contact step of pressing the sealing member towards the beading portion so that an end of the sealing member slides on the beading portion and comes into close contact with an inner surface of the housing above the beading portion; and an injection step of injecting the electrolyte into the housing through the pallet.

The close contact step may comprise pressing the sealing member with the end of the sealing member in contact with the beading portion so that the end of the sealing member deforms outwards to bring the sealing member into close contact with the inner surface of the housing.

In the electrolyte injection method of the present disclosure, the battery may include a current collector electrically connected to an electrode assembly accommodated in the housing, and the current collector may be located on the beading portion.

In the electrolyte injection method of the present disclosure, the current collector may be discontinuously disposed on the beading portion along a circumferential direction of the housing.

The injection step may comprise dispersing an electrolyte injection pressure facing a winding center hole of an electrode assembly accommodated in the housing using a core protection portion configured to pass through a central area of an internal space of the sealing member.

### Advantageous Effects

According to an aspect of the present disclosure, it may be possible to make it easy to perform the process of inserting the pallet for electrolyte injection into the battery and enhance sealability on the connected part between the pallet and the battery.

The present disclosure may have many other effects, and its description will be provided in each exemplary configuration, or regarding effects that can be easily inferred by those skilled in the art, the corresponding description is omitted.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a diagram showing a pallet according to an embodiment of the present disclosure, connected to a battery.
FIG. 2 is a perspective view of a sealing member of the present disclosure.
FIG. 3 is a cross-sectional view of a sealing member of the present disclosure.
FIG. 4 is a diagram showing a connection structure between a sealing member and a battery according to the present disclosure.
FIG. 5 is a partial enlarged view of FIG. 4.
FIG. 6 is a diagram showing a connection structure between a sealing member and a battery according to the present disclosure when the battery includes a current collector plate.
FIG. 7 is a partial enlarged view of FIG. 6.
FIG. 8 is a top view of a battery including a current collector plate.
FIG. 9 is a perspective view of a sealing member of the present disclosure, showing the sealing member shown in FIG. 3 having a core protection portion.
FIG. 10 is a top view of the sealing member shown in FIG. 9.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and the illustrations in the accompanying drawings are an exemplary embodiment of the present disclosure to describe the technical aspect of the present disclosure and are not intended to be limiting, and thus it should be understood that a variety of other equivalents and modifications could have been made thereto at the time that the application was filed.

In the drawings, the size of each element or specific parts of the elements is exaggerated, omitted or schematically illustrated for convenience of description and clarity. Accordingly, the size of each element does not necessarily reflect the actual size. When it is determined that a certain detailed description of relevant known functions or elements may unnecessarily obscure the subject matter of the present disclosure, the description is omitted. For reference, as used herein, the terms indicating directions are the terms on the basis of the elements in the accompanying drawings, and may be relative terms that are subject to change depending on the actual position or locations of the elements.

The terms indicating directions such as upper, lower, left, right, front and rear are used for convenience of description, but it is obvious to those skilled in the art that the terms may change depending on the position of the stated element or an observer.

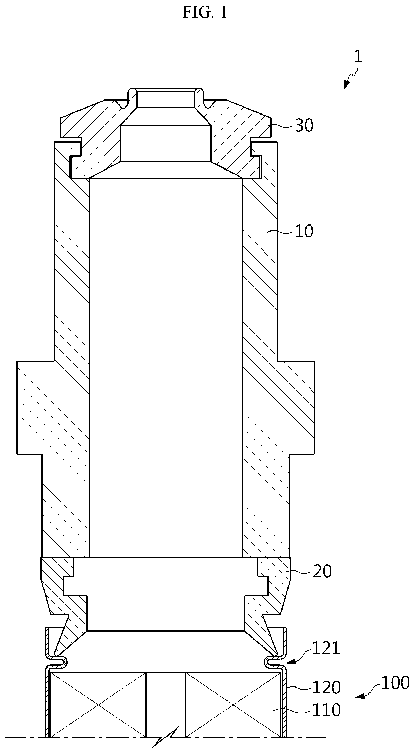

A pallet 1 according to an embodiment of the present disclosure will be described with reference to FIGS. 1 to 3.

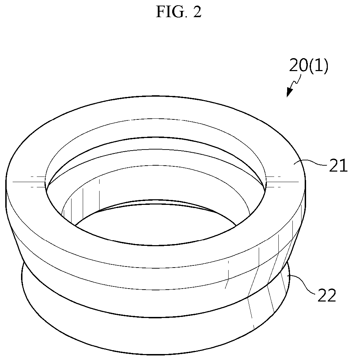

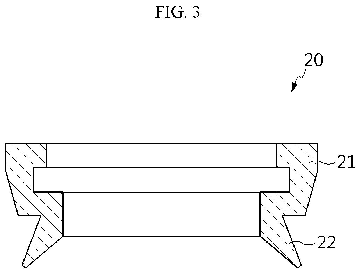

FIG. 1 is a diagram showing the pallet according to an embodiment of the present disclosure, connected to a battery. FIG. 2 is a perspective view of a sealing member of the present disclosure. FIG. 3 is a cross-sectional view of the sealing member of the present disclosure.

Referring to FIGS. 1 to 3, the pallet 1 according to an embodiment of the present disclosure may be a pallet for electrolyte injection configured to connect an electrolyte feeder for feeding an electrolyte to an open portion on a side of a housing 120 of the battery 100. In the present disclosure, the battery 100 into which the electrolyte is injected may be, for example, a cylindrical battery.

The pallet 1 may include a hopper 10 and a sealing member 20. The hopper 10 may have a hollow structure to allow the electrolyte fed by the electrolyte feeder to pass therethrough. That is, the hopper 10 may act as a connector to connect the electrolyte feeder to the battery 100 during electrolyte injection. The hopper 10 may include a metal to ensure strength. However, the material of the hopper 10 is not limited thereto, and any material that maintains optimal strength and has chemical resistance to the electrolyte passing through the hopper 10 may be applied to the hopper 10.

The sealing member 20 may include a hopper coupling portion 21 coupled to the hopper 10 and a battery sealing portion 22 configured to seal the open portion of the housing 120. The hopper coupling portion 21 may have a shape corresponding to an end on a side of the hopper 10. The battery sealing portion 22 may be configured to closely contact the inner surface of the housing 120 of the battery 100. The sealing member 20 may include a flexible material to prevent electrolyte leakage at the coupled part of the hopper 10 and the sealing member 20 and the contact part of the sealing member 20 and the battery 100.

The sealing member 20 may include, for example, a rubber material. The sealing member 20 may have a hollow structure having the internal space in communication with the internal space of the hopper 10. The sealing member 20 may have an approximately cylindrical shape with the hollow center.

The battery sealing portion 22 of the present disclosure may be configured to come into close contact with the inner surface of the housing 120 as its end deforms outwards when pressed towards the battery 100.

For example, the battery sealing portion 22 may have an increasing inner diameter or inner width in a direction facing away from the hopper 10. The battery sealing portion 22 may have a decreasing thickness in a direction facing away from the hopper 10.

In case where the inner diameter increase structure of the battery sealing portion 22 and/or the thickness decrease structure of the battery sealing portion 22 is applied, when the sealing member 20 is pressed towards the battery 100, the end of the battery sealing portion 22 may flexibly deform and come into close contact with the inner surface of the housing 120 of the battery 100. Accordingly, it may be possible to remove or reduce the electrolyte leakage risk in the process of injecting the electrolyte into the battery 100.

Meanwhile, the pallet 1 may further include an additional sealing member 30 configured to connect the hopper 10 to the electrolyte feeder. The additional sealing member 30 may prevent electrolyte leakage at the connected part of the electrolyte feeder and the hopper 10.

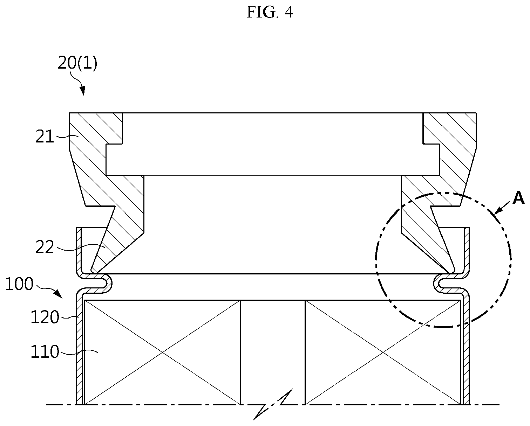

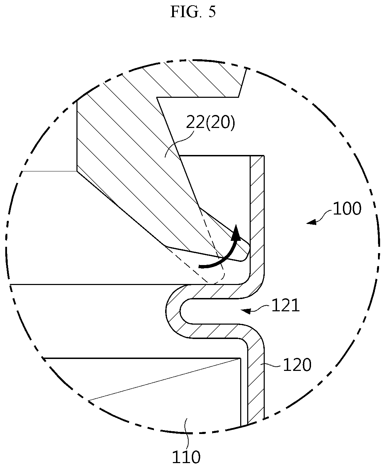

Subsequently, a shape change of the sealing member 20 of the present disclosure when pressed towards the battery 100 will be described with reference to FIGS. 4 and 5.

FIG. 4 is a diagram showing the connection structure between the sealing member and the battery according to the present disclosure. FIG. 5 is a partial enlarged view of FIG. 4.

Referring to FIGS. 4 and 5, the battery sealing portion 22 may be configured such that when pressed towards the battery 100, its end slides in the outward direction of the battery 100 on a beading portion 121 of the housing 120 of the battery 100 and comes into close contact with the inner surface of the housing 120 above the beading portion 121.

The inner surface of the beading portion 121 extending inward around the housing 120 of the battery 100 may not be a perfect flat surface, and other component may be disposed on the beading portion 121. Accordingly, though the end of the battery sealing portion 22 is in close contact with the beading portion 121, a seal on the contact interface between the battery sealing portion 22 and the beading portion 121 may be incomplete. Accordingly, as described above, since the end of the battery sealing portion 22 slides in the outward direction of the battery 100 on the beading portion 121 and comes into close contact with the inner surface of the housing 120 above the beading portion 121, it may be possible to further improve sealability.

Meanwhile, the motion of the battery sealing portion 22 when the pallet 1 is pressed towards the battery 100 may be, for example, obtained by the inner diameter increase structure of the battery sealing portion 22 and/or the thickness decrease structure of the battery sealing portion 22 as described above. Meanwhile, an angle of the inner surface of the end of the battery sealing portion 22 with the vertical direction (parallel to the Z axis) may be, for example, approximately 10° to 30°. An angle of the outer surface of the end of the battery sealing portion 22 with the vertical direction (parallel to the Z axis) may be, for example, approximately 40° to 60°. This angle condition is an angle condition before the battery sealing portion 22 is pressed and deformed.

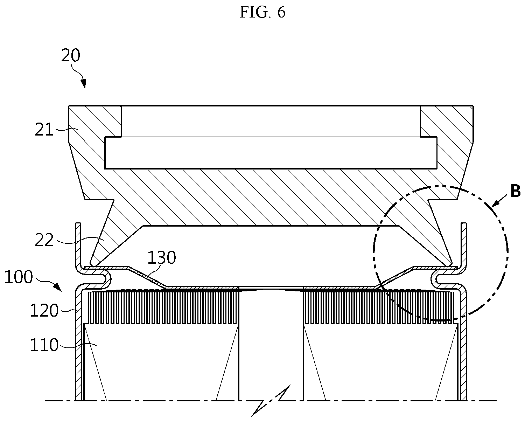

Subsequently, advantage(s) of the close contact between the battery sealing portion 22 of the present disclosure and the inner surface of the sidewall of the housing 120 will be described in more detail with reference to FIGS. 6 to 8.

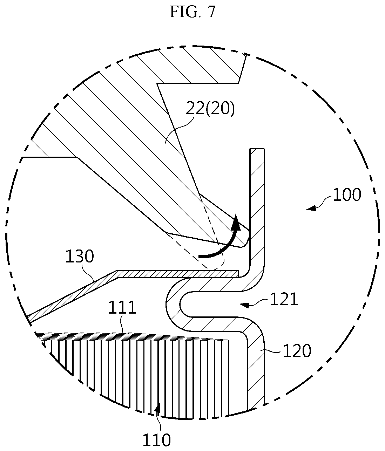

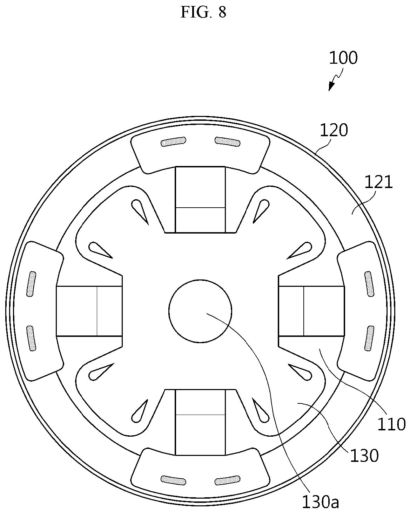

FIG. 6 is a diagram showing the connection structure between the sealing member and the battery according to the present disclosure when the battery includes a current collector plate. FIG. 7 is a partial enlarged view of FIG. 6. FIG. 8 is a top view of the battery including the current collector plate.

Referring to FIGS. 6 and 7, the pallet 1 of the present disclosure may be, for example, applied to the battery 100 including the current collector 130 disposed on the beading portion 121 of the housing 120. The battery 100 may include an electrode assembly 110, the housing 120 accommodating the electrode assembly 110 and the current collector 130 electrically connected to the electrode assembly 110 and connected to the beading portion 121 of the housing 120. The current collector 130 may be, for example, coupled to an uncoated portion 111 on a surface of the electrode assembly 110. The current collector 130 may have a current collector hole 130a. The current collector hole 130a may be formed approximately at the center of the current collector 130. The current collector hole 130a may be formed at a location corresponding to a winding center hole of the electrode assembly 110.

When the current collector 130 is disposed on the beading portion 121 of the housing 120, the upper surface of the beading portion 121 may be uneven due to the current collector 130. Additionally, when the current collector 130 is welded to the beading portion 121, the upper surface of the beading portion 121 may have lower flatness due to a weld bead.

Referring to FIG. 8, the current collector 130 may be, for example, discontinuously disposed on the beading portion 121 along the circumferential direction of the housing 120. When the battery 100 has the above-described structure, the flatness on the beading portion 121 may be lower.

In case where the flatness of the upper surface of the beading portion 121 is low, when the connected part between the pallet 1 and the battery 100 is sealed by bringing the battery sealing portion 22 into close contact with the beading portion 121, sealability may be low, and as a consequence, electrolyte leakage may occur during electrolyte injection. Accordingly, as in an embodiment of the present disclosure, due to the battery sealing portion 22 configured with its end in close contact with the inner surface of the sidewall of the housing 120 above the beading portion 121, it may be possible to ensure further improved sealability.

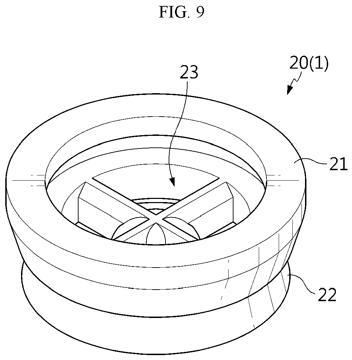

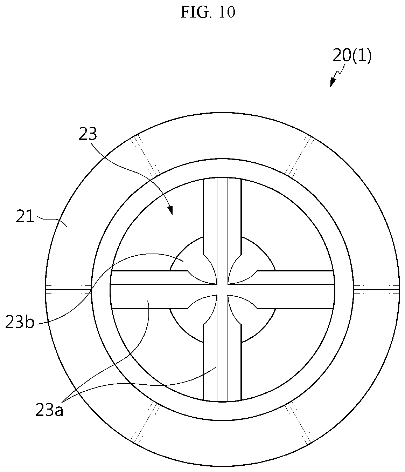

Subsequently, the sealing member 20 having a different structure from FIG. 2 will be described with reference to FIGS. 9 and 10 together with FIG. 1.

FIG. 9 is a perspective view of the sealing member of the present disclosure, showing the sealing member shown in FIG. 3 having a core protection portion. FIG. 10 is a top view of the sealing member shown in FIG. 9.

Referring to FIGS. 9 and 10 together with FIG. 1, the sealing member 20 may include the core protection portion 23. The core protection portion 23 may be configured to decrease the cross-sectional area of the internal space of the sealing member 20 through which the electrolyte passes. For example, the core protection portion 23 may be configured to go across the internal space of the sealing member 20. For example, the core protection portion 23 may be configured to pass through approximately the central area of the internal space of the sealing member 20. The core protection portion 23 may be located such that the core protection portion 23 overlaps the winding center hole of the electrode assembly 110 accommodated in the battery 100 at least in part.

The core protection portion 23 may include a plurality of bridges 23a extending outwards approximately radially from approximately the central area of the internal space of the sealing member 20. The core protection portion 23 may include a core cover 23b disposed approximately at the central area of the internal space of the sealing member 20. The core cover 23b may be configured to cover at least part of the winding center hole at the core of the electrode assembly 110 of the battery 100. The core cover 23b may be supported by the bridges 23a.

According to the above-described configuration of the sealing member 20, it may be possible to reduce the flow volume and/or flow rate when the electrolyte passing through the pallet 1 flows into the winding center hole of the core of the electrode assembly 110. Alternatively, it may be possible to prevent the electrolyte from directly flowing into the winding center hole of the electrode assembly 110 according to the size and location of the bridges 23a and/or the core cover 23b of the core protection portion 23. Accordingly, it may be possible to prevent or minimize damage to the separator disposed around the inner wall of the winding center hole of the electrode assembly 110 due to the electrolyte injection pressure.

Subsequently, an electrolyte injection method according to an embodiment of the present disclosure will be described. The electrolyte injection method of the present disclosure will be described with reference to FIGS. 1 to 10.

The electrolyte injection method of the present disclosure relates to a method for injecting the electrolyte into the battery 100 through the open portion on a side of the housing 120 of the battery 100, and may include an insertion step, a seating step, a close contact step and an injection step.

The insertion step may be the step of inserting the pallet 1 for electrolyte injection into the open portion of the housing 120. The seating step may be the step of seating the sealing member 20 of the pallet 1 on the beading portion 121 of the housing 120. The close contact step may be the step of pressing the sealing member 20 towards the beading portion 121 so that the sealing member 20 may slide on the beading portion 121 and come into close contact with the inner surface of the housing 120 above the beading portion 121. The injection step may be the step of injecting the electrolyte into the housing 120 through the pallet 1.

The close contact step may be the step of pressing the sealing member 20 with its end in contact with the beading portion 121 so that the end of the sealing member 20 may deform outwards to bring the sealing member 20 into close contact with the inner surface of the housing 120.

In the electrolyte injection method of the present disclosure, the battery 100 may include the current collector 130 electrically connected to the electrode assembly 110 accommodated in the housing 120. The current collector 130 may be disposed on the beading portion 121. The current collector 130 may be discontinuously disposed on the beading portion 121 along the circumferential direction of the housing 120.

The injection step may be the step of dispersing the electrolyte injection pressure facing the winding center hole of the electrode assembly 110 accommodated in the housing 120 using the core protection portion 23 configured to pass through the central area of the internal space of the sealing member 20.

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims and their equivalents.

### [Description of Reference Numerals]

1: Pallet
10: Hopper
20: Sealing member
21: Hopper coupling portion
22: Battery sealing portion
23: Core protection portion
23a: Bridge
23b: Core cover
100: Battery
111: Uncoated portion
110: Electrode assembly
120: Housing
121: Beading portion
130: Current collector
130a: Current collector hole

## Claims

1. A pallet for electrolyte injection, configured to connect an electrolyte feeder for feeding an electrolyte to an open portion on a side of a housing of a battery, the pallet comprising:
a hopper having a hollow structure; and
a sealing member including a hopper coupling portion coupled to the hopper and a battery sealing portion configured to seal the open portion, wherein the battery sealing portion is configured to come into close contact with an inner surface of the housing of the battery.

2. The pallet according to claim 1, wherein the sealing member has a hollow structure having an internal space in communication with an internal space of the hopper.

3. The pallet according to claim 1, wherein the battery sealing portion is configured to come into close contact with the inner surface of the battery housing as an end of the battery sealing portion deforms outwards when pressed towards the battery.

4. The pallet according to claim 1, wherein the battery sealing portion is configured to increase in inner diameter or an inner width in a direction facing away from the hopper.

5. The pallet according to claim 1, wherein the battery sealing portion is configured to decrease in thickness in a direction facing away from the hopper.

6. The pallet according to claim 1, wherein the battery sealing portion is configured such that when pressed towards the battery, an end of the battery sealing portion slides in an outward direction of the battery on a beading portion of the housing of the battery and comes into close contact with the inner surface of the housing above the beading portion.

7. The pallet according to claim 1, wherein the sealing member includes a core protection portion configured to reduce a cross-sectional area of an internal space of the sealing member through which the electrolyte passes.

8. The pallet according to claim 7, wherein the core protection portion is configured to go across the internal space of the sealing member.

9. The pallet according to claim 8, wherein the core protection portion is configured to pass through a central area of the internal space of the sealing member.

10. The pallet according to claim 8, wherein the core protection portion is located such that the core protection portion overlaps a winding center hole of an electrode assembly accommodated in the battery at least in part.

11. An electrolyte injection method for injecting an electrolyte into a battery through an open portion on a side of a housing of a battery, the electrolyte injection method comprising:
an insertion step of inserting a pallet for electrolyte injection into the open portion;
a seating step of seating a sealing member of the pallet on a beading portion of the housing;
a close contact step of pressing the sealing member towards the beading portion so that an end of the sealing member slides on the beading portion and comes into close contact with an inner surface of the housing above the beading portion; and
an injection step of injecting the electrolyte into the housing through the pallet.

12. The electrolyte injection method according to claim 11, wherein the close contact step comprises pressing the sealing member with the end of the sealing member in contact with the beading portion so that the end of the sealing member deforms outwards to bring the sealing member into close contact with the inner surface of the housing.

13. The electrolyte injection method according to claim 11, wherein the battery includes a current collector electrically connected to an electrode assembly accommodated in the housing, and
wherein the current collector is located on the beading portion.

14. The electrolyte injection method according to claim 13, wherein the current collector is discontinuously disposed on the beading portion along a circumferential direction of the housing.

15. The electrolyte injection method according to claim 11, wherein the injection step comprises dispersing an electrolyte injection pressure facing a winding center hole of an electrode assembly accommodated in the housing using a core protection portion configured to pass through a central area of an internal space of the sealing member.
